# EUROPEAN PATENT APPLICATION

(11) **EP 4 800 502 A1**
(43) Date of publication of application: **02.09.2026**
(21) Application number: 25160909.5
(22) Date of filing: 28.02.2025
(51) Int. Cl.: G05B 23/02

(54) **A METHOD FOR AUTOMATIC ANOMALY DETECTION BASED ON LIVE SENSOR DATA APPLIED TO CONDITION MONITORING OF AN INDUSTRIAL MACHINERY**

(71) Applicant: Siemens Aktiengesellschaft, 80333 München (DE)
(72) Inventor: Zhemelev, Georgy, 2720-803 Amadora (PT); Sazykin, Dmitry, 1150-314 Lisbon (PT)
(74) Representative: Siemens Patent Attorneys

(57) **Abstract**

It is the objective of the present invention to provide a method for automatic anomaly detection based on live sensor data applied to condition monitoring of an industrial machinery that require less effort for its training with historical data and that is able to react more flexible on possible amendments in the operation of the industrial machinery.

This objective is achieved according to the present invention by a method for automatic anomaly detection based on live sensor data applied to condition monitoring of an industrial machinery, e.g. a gas turbine or a production resource, comprising the steps of:
a) operating the industrial machinery according to a pre-selected mode of operation and monitoring the operation with a plurality of sensors, said sensors forwarding their sensor data for further evaluation;
b) receiving said sensor data and evaluating the sensor data in terms of relation values being deducted for a predetermined combination of sensor data stemming from various sensors;
c) determining trust values for these relation values thereby increasing the trust value in dependency of the stability of the relation values over the course of the operation of the industrial machinery;
d) comparing the trust values against predetermined thresholds and defining a relation value as operation normal once the trust value has exceeded the predetermined threshold;
e) during the ongoing operation of the industrial machinery comparing the relations values deducted from the ongoingly incoming sensor data to the operation normal; and
f) creating an anomaly event once the relation value is deviating from the operation normal beyond a pre-determined tolerance range.

## Description

The present invention relates to a method for automatic anomaly detection based on live sensor data applied to condition monitoring of an industrial machinery, such as a gas turbine or a production resources.

In the field of industrial machinery service, special attention is paid to the prevention of incidents, like unexpected machine behavior or malfunctioning, which is crucial to keep the business running and safeguard the respective KPI's of an enterprise. One of possible approaches that help in solving this task is anomaly detection.

In order to perform anomaly detection, it is a pre-requisite to know the normal behavior of the system, such as a product line, a distinct production resource and the like. When working with sensors readings (i.e. data acquisition during the production of a good), it means to know what relations between sensor signals are kept over time.

The Siemens group already provides solutions for anomaly detection such as SPPA-D3000 Plant Monitor or Siemens Anomaly Monitor (as part of the Omnivise Digital Services). These solutions are based on the idea of learning normal behavior from historical data. After the models have been trained accurately, new measured data will be continuously compared with what is expected based on the learnt behavior. The more deviation between the expected and the actual data occurs, the more likely it is the conclusion that the behavior of the industrial machinery may get more and more abnormal.

Nonetheless, existing system always require to train the system with historical data which makes the system cumbersome and inflexible.

It is therefore the objective of the present invention to provide a method for automatic anomaly detection based on live sensor data applied to condition monitoring of an industrial machinery that require less effort for its training with historical data and that is able to react more flexible on possible amendments in the operation of the industrial machinery.

This objective is achieved according to the present invention by the measures taken in accordance with the independent claims. Further advantageous embodiments are proposed by the dependent claims.

In particular, the present invention discloses a method for automatic anomaly detection based on live sensor data applied to condition monitoring of an industrial machinery, e.g. a gas turbine or a production resource, comprising the steps of:
a) operating the industrial machinery according to a pre-selected mode of operation and monitoring the operation with a plurality of sensors, said sensors forwarding their sensor data for further evaluation;
b) receiving said sensor data and evaluating the sensor data in terms of relation values being deducted for a predetermined combination of sensor data stemming from various sensors;
c) determining trust values for these relation values thereby increasing the trust value in dependency of the stability of the relation values over the course of the operation of the industrial machinery;
d) comparing the trust values against predetermined thresholds and defining a relation value as operation normal once the trust value has exceeded the predetermined threshold;
e) during the ongoing operation of the industrial machinery comparing the relations values deducted from the ongoingly incoming sensor data to the operation normal; and
f) creating an anomaly event once the relation value is deviating from the operation normal beyond a pre-determined tolerance range.

Therefore, the present invention allows to extract the knowledge about data relations from the live data stream of sensor data using the novel method of causal inference and store the information in the form of graphs of relations between sensors, labelled with operation mode of the machine. Then, by aggregating this information over time and analyzing it in comparison with causal relations observed in live data, an automatic system can detect disruptions in stable relations. Such disruptions are considered as anomalies, and the system can report them to a service engineer (in the form of an alert, warning etc.) and provide a useful visualization. The main difference between the present invention and known model-based solutions is that the present invention does not require to train the models to compare their outputs with the actual values from the industrial machinery. To the contrary, the causality analysis uses the historical data to find relationships between the sensor signals over time.

Preferred embodiments of the present invention are listed in the attached dependent claims.

Preferred embodiments of the present invention will be described in more detail with reference to the attached drawings (like features have like reference numbers) which depict in:
- Figure 1: schematically an example of a strong relationship between sensors (integral/derivative);
- Figure 2: schematically a concept of a system for automatic anomaly detection based on live sensor data applied to condition monitoring of an industrial machinery;
- Figure 3: schematically a concept of a distributed computing infrastructure;
- Figure 4: schematically the system shown in Figure 2 with more detailed information on the functionalities of the system;
- Figure 5: schematically a detailed structure of the data buffer and the transformation of input data into tasks;
- Figure 6: schematically the LEB and RER concepts as a simple implementation of an anomaly predictor; and
- Figure 7: schematically a possible GUI for the visualization of causal graphs and anomaly detection results derived thereof.

The present invention discloses a method for automatic anomaly detection based on live sensor data applied to condition monitoring of an industrial machinery, such as a gas turbine or a production resources. The method uses a computerized system that continuously performs causal analysis and compares new results with previously found stable relationships collected over some long period of time thereby considering the operation modes of the monitored industrial machinery. Based on the results of this comparison, the method detects anomalies in the machine behavior when stable relations are disturbed (e.g., when existing relations fade or new relations emerge).

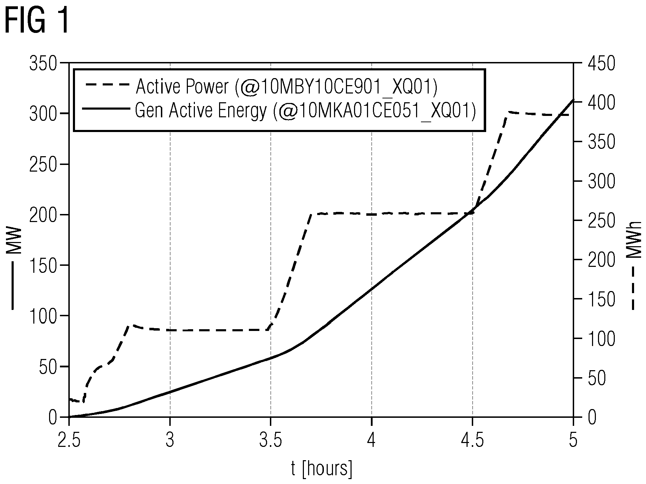

Before describing the technical features of the present invention, it is illustrated how causal inference can be used to detect anomalies in a simple example. In Fig. 1, plots of two sensor signals are shown: the power and the generated energy of a plant. It is known from theory that the latter is an integral of the former and sensor data support that claim (direct integration of the power signal and comparison with the energy signal resulted in 0.05% normalized root mean square error). The algorithm here used can detect such relationships with high accuracy. Supposing to observe that this example relation in the nominal operation mode of the plant is valid over several months, but at some point this relation is disturbed, i.e., the integral of the power no longer matches the energy signal within the required precision. This is an anomaly, which could indicate a sensor fault or some malfunction in the power generation cycle. Either option requires timely attention from a service engineer. Therefore, an automatic monitoring solution that can detect such anomalies and send alarms to service staff, is of interest for use in the field of industrial machinery service.

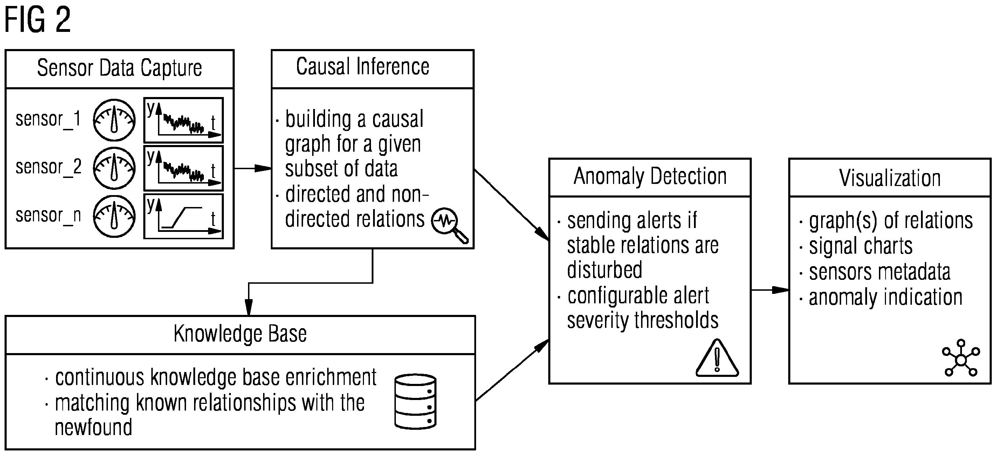

Figure 2 now schematically shows an overview for a system preforming the method mentioned above. Its main components include a causal inference apparatus, a continuously enriched knowledge base of found relations, an anomaly detection algorithm, and a graphical user interface (GUI) that allows the visualization of the results.

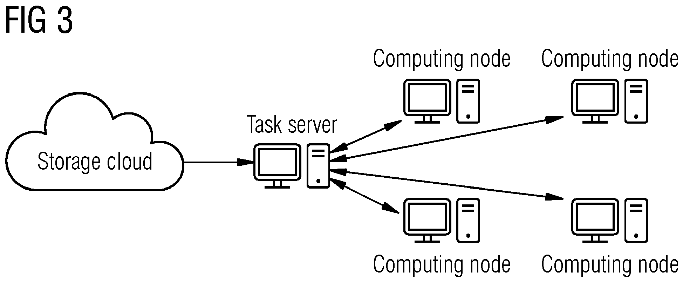

Considering the possibly large amount of sensor data that must be processed in the present method, an efficient causal analysis of the data may require to distribute the computations on several machines as shown in Fig. 3. The organization of the distributed processing in the ystem will be described below. Also, the source of the sensor data to be analyzed can probably be in a cloud, thus the sensor data capture is executed according to known technical standards.

During the execution of the method, the present system may utilize three kinds of data as its inputs:
i) sensor data,
ii) sensor metadata, and
iii) machine operation mode.

It is assumed that live sensor data comes in the form of timeseries. A timeseries is defined as a sequence of "timestamp - sensor value" pairs, ordered by time (ascending). Typical rate of data coming into the present system is 1 Hz for each sensor (channel), i.e., the system is applied to low-frequency data (also known as "static"), and not highfrequency ("dynamic") data. Usually, there are 3.000 to 8.000 data channels for a single gas or steam turbine that is used in energy production plant. Rough estimate of network bandwidth required for streaming of this amount of data is ~1 Mbit/s per each monitored machine (e.g., a turbine).

Sensors usually come with their respective metadata: tag (e.g., in a form of KKS), unit of measure, and description. This information is useful for visualization purposes but is not required for the functioning of the method. Tags, if present, are used as identifiers of channels (here and further terms "channel" and "signal" are used interchangeably) but can be replaced by some other identifier that is used in the data source. For the further description tags are considered as unique identifiers of data channels.

The last input that exemplarily is required for the method is the machine operation mode (updated each second or when it actually changes). As the causal relationships between sensors are assumed to be stable within the operation modes, this information is required for the proper partitioning of the sensor data and its analysis. Examples of operation modes may include but are not limited to "purge sequence", "ignition", "full speed no load", "normal operation", "shutdown" etc.

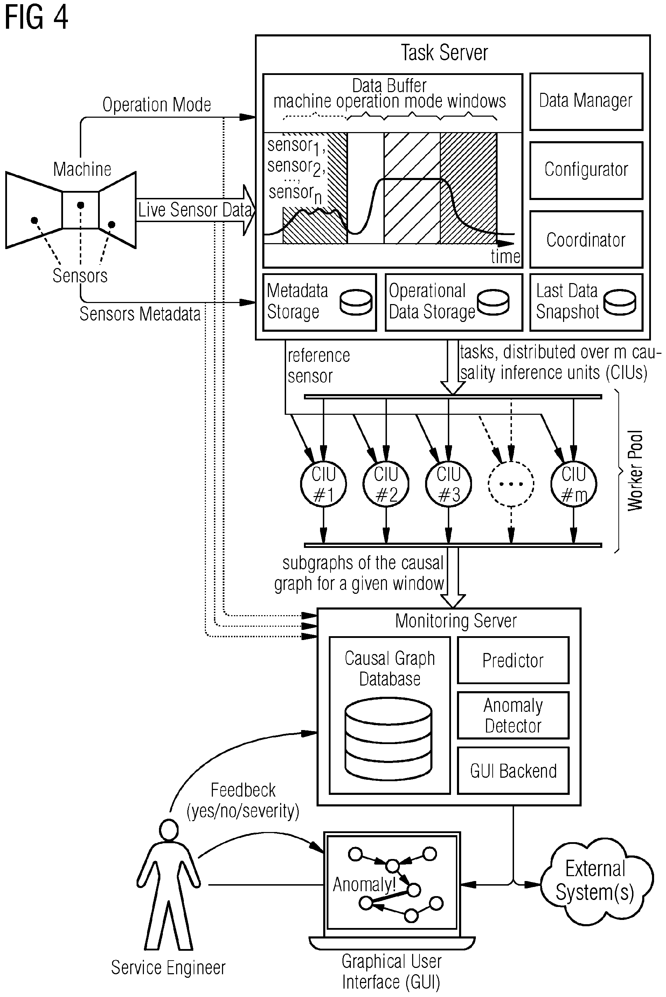

Schematically, a more detailed view of the system shown in Fig. 2 is illustrated in Fig. 4. The main components are the following:
a) a Task Server which includes:
   a1) Data Buffer, intended for temporary storage of incoming live data;
   a2) Operational Data Storage, needed for persistent storage of data being processed;
   a3) Metadata Storage, which is useful for collecting extra information about sensors;
   a4) Data Manager, required for handling input data and machine operation modes;
   a5) Configurator, responsible for auto-discovery of processing nodes and their setup;
   a6) Coordinator, that performs task management and load balancing between nodes;
   a7) Last Data Snapshot, helpful when working with rarely updated channels; and
b) a Monitoring Server which includes:
   b1) Causal Graph Database, serving as a storage for causal relations found in data;
   b2) Predictor, that uses the stored information to find and quantify stable relations;
   b3) Anomaly Detector, which keeps track of the last relationships and finds anomalies;
   b4) GUI backend, useful for showing the found anomalies and sensor data in the UI;
   b5) the Graphical User Interface (frontend) that will visualize found relationships within sensor data, detected anomalies and corresponding charts.

Hereinafter, the functioning of the method and the system is explained in more detail. As an exemplary industrial machinery a gas turbine in a power plant is used. The incoming data of all sensors allocated to supervise the functioning of the gas turbine are collected in the Data Buffer that is partitioned by the machine operation mode (as timestamps of modes switching are known from the input in addition to live data). The Data Manager component keeps track of the operation modes and performs the partitioning of data into windows, i.e., time-limited chunks of data corresponding to operation modes.

The size of the Data Buffer is configurable, and windows have variable lengths (see details further). Also, the Last Data Snapshot is stored in order to keep track of data of all channels even if some of them are not present in the Data Buffer at some moment (e.g., due to dead-banding).

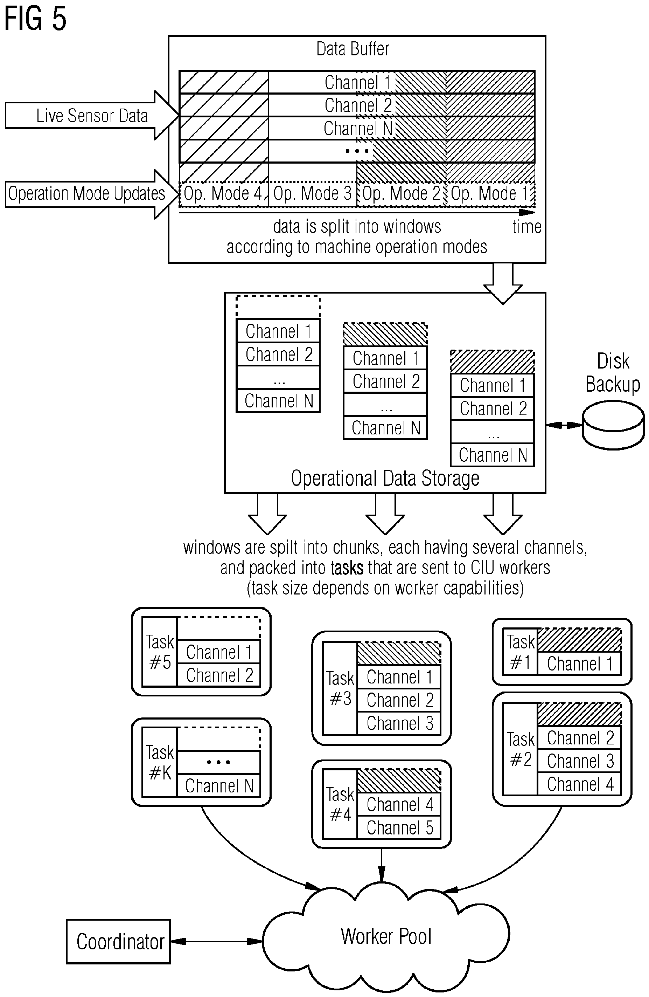

When the operation mode changes, the accumulated data is taken from the Data Buffer and moved into the Operational Data Storage, labelled with the corresponding operation mode (see Fig. 5). The Data Buffer continues to receive live data while the Operational Data Storage (that also keeps a disk backup of its contents) is being used by the Data Manager and the Coordinator to form tasks and send them for processing into the CIU worker pool which can be seen as a pool of computational power for the various causality inference units (CIU) running a causality inference algorithm.

The default size of the Data Buffer can be set to 24 hours. It is known that a typical productive large gas turbine (equipped with 5.000 to 8.000 sensors) provides around 600 Mb of static data per day stored in a DCDAT file. In application memory this would occupy a bit more, but one can readily assume that 24 hours of stored data would not exceed 1 Gb of RAM. Windows can be as short as several minutes (e.g., for an ignition mode interval) or last for the whole duration of the Data Buffer (e.g., when a plant stays in the normal operation mode all day and night). In that regard it is suggested to parameterize the application with minimum and maximum lengths of windows. The first one is needed so as to prevent excessive fragmentation of data (that can lead to incorrect analysis results), and the second one determines the longest possible delay between updates of the Causal Graph Database and anomaly detection cycles. The limits in which the maximum window size can be set are dependent on the CIU implementation as it can require some substantial amount of data, e.g., 2-3 hours, to perform reliable causal inference in steady states, like normal operation.

Also, the system can be configured with a whitelist or blacklist of sensors to use: if the first option is used, only sensors matching those in the whitelist are taken for collection and processing, and in the case with a blacklist, all sensors except mentioned in the blacklist are used by the system. If needed, it is possible to make some combination of such lists for a particular customer. Using white- or black-lists will be helpful to focus on the most important subset of sensors and decrease the requirements for computational resources needed to the system.

Hereinafter, the task management as shown in Figure 4 is described in more detail. A task is considered to be a unit of computational work comprising an identifier, a payload with the data of kᵢ sensors in a window, the operation mode of the window and a reference tag where kᵢ is a i-th subset of the set of all sensors (no intersections). When a CIU in the worker pool receives a task, it performs causal inference between the data of the reference tag and each sensor data given in the task's payload. If the sensor of the reference tag is comprised within sensors in the task, its data is taken from the task's payload, otherwise CIU requests the data for the reference tag from the data manager (which keeps track of the association between identifiers of active tasks and time intervals of their respective windows).

The task management is performed by the coordinator which assigns tasks to workers, deciding on ki value for each worker according to its system specifications and known processing times of each particular CIU. The coordinator is also responsible for acknowledgement of completed tasks.

The worker pool can dynamically change its size, i.e., new CIU workers can join online the existing CIU worker basis, and others can leave the pool (e.g., if there is no need in their computing power at some moment). These processes are controlled by the configurator component, which maintains the worker pool by governing all CIUs settings (as they must be consistent) and enabling auto-discovery of the nodes. When a new CIU enters the worker pool, the configurator provides the network address of the newcome worker to the coordinator thereby verifying the identity of the CIU. Then the worker reports its system specifications to the coordinator so that it can prepare tasks of a suitable size for that worker.

CIU workers periodically send heartbeat messages to the coordinator so it can detect workers leaving the pool unexpectedly (when there are no heartbeats received from a worker for a configured amount of time). In that case the task that was assigned for that worker is reassigned to another worker, and sensor data required for the task is taken from the Operational Data Storage.

Depending on the implementation, CIU workers can also request metadata for sensors of interest. Metadata is stored on the Task Server and can be retrieved via the corresponding API. The desired amount of CIU workers in the pool depends on the processing power of the CIU workers and the amount of data to be processed. The suggested solution utilizes two-level parallelism:
i) distributed calculations across the machines in a network,
ii) multithreading within each worker machine,
iii)
so the default recommend amount of workers will be different depending on their hardware.

Within each task, a CIU finds causal relationships of the reference sensor vs. the given subset of sensors. It may just be stated that a relation is present or is quantified with some percentage. Then, the CIU sends the found list of relations (which is essentially a simple subgraph of the causal graph for that window) along with the reference sensor, that was used to build it, and the operation mode of the window to the Causal Graph Database that merges the subgraphs from all CIUs within a time range of the window, and stores the resulting causal graph against the key pair "time range - machine operation mode".

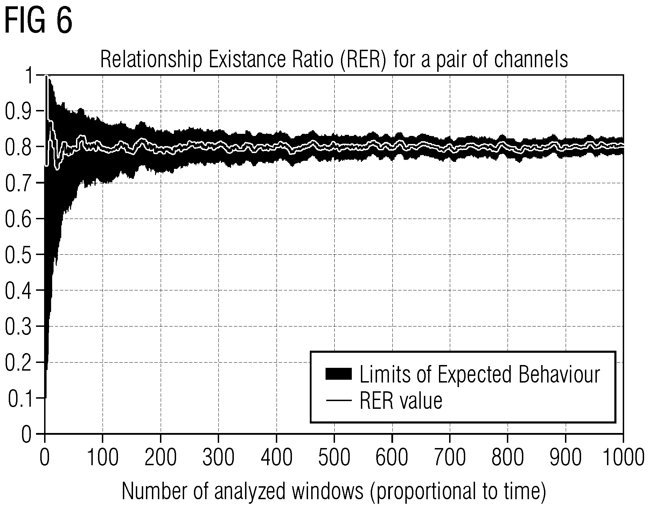

The Predictor application, located on the Monitoring Server, encapsulates an algorithm that aggregates causal graphs over time in order to reveal stable patterns of signal relationships within an operation mode. The simplest predictor can work like this: given a causal relation between two signals, the ratio between the number of intervals can be calculated where that relation was held and the total number of analyzed intervals. This ratio is hereinafter called as RER for relationship existence ratio. The ratio of 50% means that the analyzed relation is unstable; when it's close to 0%, the relation is defined as absent; and when it's approaches 100%, it can be considered as stable. Regardless of interpretation, the RER can be considered as a binominal random variable and its confidence interval (e.g. using the Clopper-Pearson method, like the binofit function in MATLAB) can be estimated for a given confidence level (configurable). After a number of trials (i.e., analyzed windows), the estimate will converge to some interval that can be considered as limits of expected behavior (LEB). These limits and the RER are stored and continuously updated during the system operation as this is shown in Fig. 6.

When the RER exceeds the LEB, an alert can be generated. For more flexibility, it's possible to calculate the LEB for two numbers of trials, e.g. A = 100 last trials and B = 10 last trials. Given that, when the ratio exceeds B (which is expected to be wider than A) the system can generate an alert, and when it exceeds A, it can generate a warning.

Regardless of the Predictor implementation, the Anomaly Detector can differentiate between various alarm severity levels depending on particular sensors that may have their relationships disturbed. For instance, when there is an anomaly detected in the relation between power signal and its respective energy signal, the system can generate a critical alert while for some not very important sensor pairs it can generate informational warnings if their relation is disturbed. This differentiation can be incorporated into the Anomaly Detector configuration in the following form:
i) mapping of severity levels to lists of relations with that severity (each relation here is represented as pair of sensors' identifiers);
ii) mapping of severity levels to lists of sensors: the corresponding severity of each list will be applied to all relations that the sensors from that list may have with other sensors;
iii) default severity level for all other relationships.

Actual severity levels are dependent on the use-case where the System will be used.

The system implies a GUI that can show the complete causal graph which is taken from the causal graph database. As that database stores graphs with respect to time and machine operation modes, the GUI is also intended to visualize the relationships with respect to these attributes.

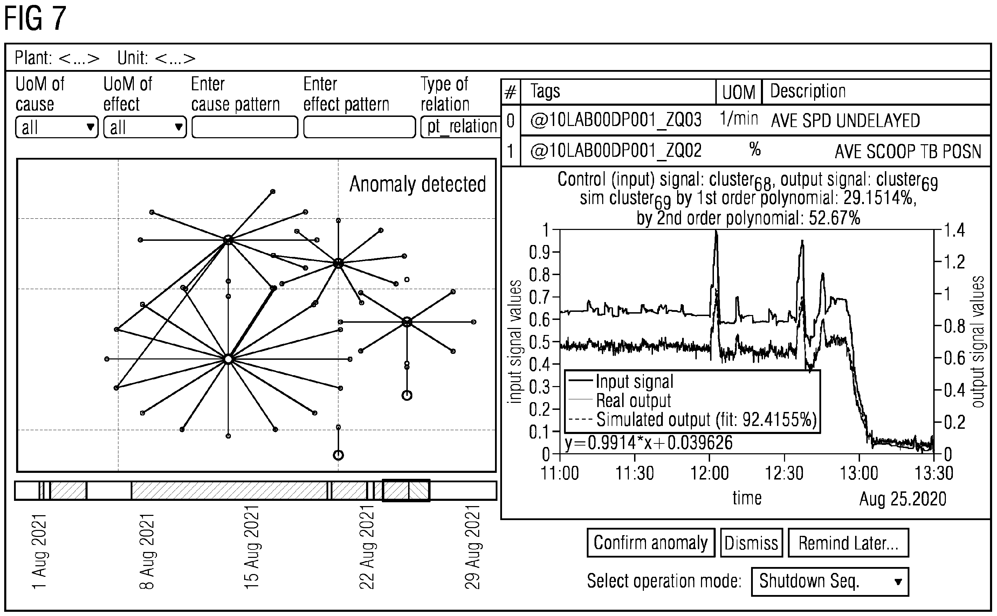

When an anomaly is detected, the GUI will highlight the relation that produced that anomaly. By clicking on the alert, a user can see the data and metadata (unit of measure, description etc.) of the sensors that formed the relation (see also Fig. 7).

As service engineers and/or other skilled persons who can use the system may have some valuable knowledge about functioning of the monitored machinery, the system makes it possible to acquire feedback from a user via the GUI. For example, as shown in Fig. 7, there can be buttons to confirm the found anomaly, to dismiss it (given that the user knows for sure that the event is not an anomaly) or to postpone the decision. It is also possible to enrich the user's decision by allowing the user to specify a severity level for the event and underlying relationship between sensors to facilitate more precise separation between events. The feedback information can be used in several ways:
i) on GUI-side without influencing anomaly detection algorithms; in that case the GUI Backend stores mapping of severity levels to lists of relations with that severity and uses this mapping to override alarms severity that come from the anomaly detector before passing them to GUI;
ii) as an adjustment of the anomaly detector's configuration, directly changing the severity levels mappings;
iii) as a hint for the predictor that can be used by it in its algorithm, given that the predictor's implementation supports such hints;
iv) as a hint for the causal inference units (CIU) to modify the causal relationships search, if their implementation supports such hints; in that case the feedback information must be passed to CIUs through the coordinator, if CIUs can accept such hints at runtime, or through the configurator, if CIUs can accept such hints only as configuration parameters.

The system's support for feedback from users is schematically shown with light grey arrows in Fig. 4. That support is important for practical applications as it allows to further reduce the false positive rates based on the domain expertise of service engineers and/or other experts who uses the system.

Detected anomalies can be output into 3rd party systems as a sequence of events.

Also, service engineers and/or domain experts may find the system useful for investigation of incidents on the industrial machinery that happened in the past and for extraction of new knowledge about relationships between signals which describe processes that take place in the machinery. As the system collects a knowledge base of causal relations over time, this information is readily available for researchers that can investigate long-term relations, their dependence on operation modes, seasonal factors etc.

The physical or mathematical model of the monitored machine is not required. This allows application of the suggested solution to a wide range of industrial machinery. The system continuously updates its knowledge base during operation, so there is no need to collect special datasets to train the system beforehand, which reduces costs.

The methods used by the system rely on measured sensor data and a set of machine operation modes, it does not depend on meta-data (e.g. sensor specification) which might be missing or incorrect, though allows using it for visualization purposes. The methods used by the system can be based on the causal inference which is a novel approach to root cause analysis, having a lot of advantages over traditional methods:
i) The system's architecture is highly scalable both vertically and horizontally making it applicable to on-premise solutions, as well as cloud-based and even IoT and edge-computing environments.
ii) The System comprises a feedback loop between its components and its users allowing to incorporate their knowledge about the anomalies in the knowledge base, in the anomalies visualization, in the anomaly detection and/or causal relationships search algorithms.
iii) Using the described system as an analytical tool that reduces experts' time needed to search and verify relationships between signals, which results in reduced costs required for incident investigation;
iv) shows a structure of sensor relations as a directed graph, which, combined with clusters and metadata visualization, gives experts the ability for more in-depth investigations.

## Claims

1. A method for automatic anomaly detection based on live sensor data applied to condition monitoring of an industrial machinery, e.g. a gas turbine or a production resource, comprising the steps of:
a) operating the industrial machinery according to a pre-selected mode of operation and monitoring the operation with a plurality of sensors, said sensors forwarding their sensor data for further evaluation;
b) receiving said sensor data and evaluating the sensor data in terms of relation value being deducted for a predetermined combination of sensor data stemming from various sensors;
c) determining trust values for these relation values thereby increasing the trust value in dependency of the stability of the relation values over the course of the operation of the industrial machinery;
d) comparing the trust values against predetermined thresholds and defining a relation value as operation normal once the trust value has exceeded the predetermined threshold;
e) during the ongoing operation of the industrial machinery comparing the relations values of the incoming sensor data to the operation normal; and
f) creating an anomaly event once the relation value is deviating from the operation normal beyond a pre-determined tolerance range.

2. The method according to claim 1, wherein
the tolerance range for a relation value is determined in dependency from the development of the trust value.

3. The method according to claim 1 or 2, wherein
the width of the tolerance range behaves reciprocally to the height of the trust value.

4. The method according to any of the preceding claims, wherein the evaluation comprises to find causal relationships of the reference sensor versus a given subset of sensors.

5. The method according to any of the preceding claims, wherein the evaluation states that a causal relationship is present and preferably quantifies this causal relationship with the trust value

6. The method according to any of the preceding claims, wherein a found list of the causal relationships which is preferably represented by a subgraph of the causal graph for that evaluation is forwarded along with the reference sensor, that has been used to build it, and with the operation mode of the evaluation to a causal graph database that merges the subgraphs from all evaluations within a time range of the evaluation period, and stores the resulting causal graph against the key pair "time range - machine operation mode".

7. The method according to any of the preceding claims, wherein an algorithm is provided that aggregates causal graphs over time in order to reveal stable patterns of signal relationships within an operation mode.

8. The method according to any of the preceding claims, wherein given a causal relation between two signals, the ratio between the number of intervals is calculated where that relation was held and the total number of analyzed sensor data intervals.

9. The method according to claim 8, wherein a ratio of 50% defines a result that the analyzed relationship is unstable; a ration close to 0% defines a result the analyzed relationship is absent and a ration approaching towards 100% defines a result that the analyzed relationship is stable.

10. The method according to claim 8 or 9, wherein the ration is considered as a binominal random variable and its trust tolerance or confidence interval, e.g. using the Clopper-Pearson method, is estimated for a given confidence level.

11. The method according to any of the preceding claim 8 to 10, wherein after a number of trials, i.e., a plurality of analyzed evaluation periods, the estimate is converged to an expert confidence interval that is considered to define the limits of the expected behavior (LEB)

12. The method according to any of the preceding claims 8 to 11, wherein the expert confidence interval and the ratio are stored and continuously updated during the ongoing acquisition of sensor data.
